# EUROPÄISCHE PATENTANMELDUNG

(11) **EP 1 108 747 A1**
(43) Veröffentlichungstag der Anmeldung: **20.06.2001**
(21) Anmeldenummer: 00126560.2
(22) Anmeldetag: 12.12.2000
(51) Int. Cl.: C08K 9/02, B41M 5/26, G03C 1/725

(54) **Lasermarkierbare Kunststoffe**

(30) Priorität: 18.12.1999 DE 19961304
(71) Anmelder: MERCK PATENT GmbH, 64293 Darmstadt (DE)
(72) Erfinder: Kniess, Helge, 64331 Weiterstadt (DE); Heinz, Dieter, 64646 Heppenheim (DE); Delp, Reiner, 64293 Darmstadt (DE); Pfaff, Gerhard, Dr., 64839 Münster (DE); Kuntz, Matthias, Dr., 64342 Seeheim-Jugenheim (DE)

(57) **Zusammenfassung**

Die vorliegende Erfindung betrifft lasermarkierbare Kunststoffe, die sich dadurch auszeichnen, daß sie als Dotierstoff ein- oder mehrfach beschichtete Graphitteilchen enthalten.

## Beschreibung

Die vorliegende Erfindung betrifft lasermarkierbare Kunststoffe, die sich dadurch auszeichnen, daß sie als Dotierstoff ein- oder mehrfach beschichtete Graphitteilchen enthalten.

Die Kennzeichnung von Produktionsgütern wird in fast allen Industriezweigen zunehmend wichtiger. So müssen häufig z. B. Produktionsdaten, Verfallsdaten, Barcodes, Firmenlogos, Seriennummern, etc., auf Kunststoffen, Kunststoffolien aufgebracht werden. Derzeit werden diese Markierungen überwiegend mit konventionellen Techniken wie Drucken, Prägen, Stempeln und Etikettieren ausgeführt. Wachsende Bedeutung gewinnt aber die berührungslose, sehr schnelle und flexible Markierung mit Lasern, insbesondere bei Kunststoffen. Mit dieser Technik ist es möglich graphische Beschriftungen, wie z.B. Barcodes, mit hoher Geschwindigkeit auch auf eine nicht plane Oberfläche aufzubringen. Da sich die Beschriftung im Kunststoffkörper selbst befindet, ist sie dauerhaft abriebbeständig.

Viele Kunststoffe, wie z.B. Polyolefine und Polystyrole, lassen sich bisher nur schwierig oder überhaupt nicht mit dem Laser markieren. Ein CO₂-Laser, der Licht im Infrarotbereich bei 10,6 µm aussendet, bewirkt bei Polyolefinen und Polystyrolen selbst bei sehr hohen Leistungen nur eine schwache, kaum lesbare Markierung. Im Falle der Elastomeren Polyurethan und Polyetherestern tritt mit Nd-YAG-Lasern keine Wechselwirkung, bei CO₂-Lasern dagegen eine Gravur auf. Der Kunststoff darf das Laserlicht nicht völlig reflektieren oder durchlassen, da es dann zu keiner Wechselwirkung kommt. Es darf aber auch nicht zu einer starken Absorption kommen, da in diesem Fall der Kunststoff verdampft und nur eine Gravur zurückbleibt. Die Absorption der Laserstrahlen und somit die Wechselwirkung mit der Materie ist abhängig von dem chemischen Aufbau des Kunststoffes und der verwendeten Wellenlänge des Lasers. Vielfach ist es notwendig, damit Kunststoffe laserbeschriftbar werden, entsprechende Zusatzstoffe, z.B. Absorber, zuzugeben.

Für die Laserkennzeichnung von Kunststoffen werden neben CO₂-Lasern zunehmend Nd:YAG-Laser verwendet. Die üblicherweise verwendeten YAG-Laser geben einen gepulsten Energiestrahl mit einer charakteristischen Wellenlänge von 1064 nm oder 532 nm ab. Das Absorbermaterial muß in diesem speziellen NIR-Bereich eine ausgeprägte Absorption zeigen, um bei den schnellen Beschriftungsvorgängen eine ausreichende Reaktion zu zeigen.

Die Verwendung von Graphit als Dotierstoff bei der Lasermarkierung ist beispielsweise aus der EP 0 053 256 oder WO 94/12352 bekannt. Hierbei handelt es sich um helle Markierungen auf schwarzer Kunststoffoberfläche. Graphit besitzt aber den Nachteil, daß die Laserbeschriftung lediglich eine graubraune Schrift auf schwarzem Untergrund erzeugt, die dann nicht mehr ausreichend kontrastreich ist.

Aufgabe der vorliegenden Erfindung war es daher lasermarkierbare Kunststoffe zu finden, die unter Einwirkung von Laserlicht eine weiße Markierung mit hohem Kontrast ermöglichen. Der Füllstoff sollte die Absorption der Laserenergie erhöhen und/oder durch Gasentstehung bei Laserbeschuß den Kontrast durch zusätzliche Schaumbildung verbessern.

Überraschenderweise wurde gefunden, daß sich die Lasermarkierbarkeit von Kunststoffen, insbesondere der Kontrast der Markierung, verbessern läßt, wenn man beschichtete Graphitteilchen, wie beispielsweise mit CaCO₃, CaSO₄, Fe₃O₄ oder Turnbulls Blau beschichteten Graphit einsetzt. Gegenüber dem unbeschichteten Graphit werden deutlich hellere Markierungen bei gleichzeitig niedrigeren Energiedichten erreicht.

Durch den Zusatz des beschichteten Graphits in Konzentrationen von 0,01 bis 4 Gew.% bezogen auf das Kunststoffsystem, vorzugsweise 0,3 bis 2,5 Gew.%, und insbesondere 0,5 bis 2 Gew.%, wird bei der Lasermarkierung von thermoplastischen Kunststoffen, ein hoher Kontrast erreicht.

Die Konzentration des Dotierstoffs im Kunststoff, ist allerdings abhängig von dem eingesetzten Kunststoffsystem. Der geringe Anteil an beschichtetem Graphit verändert das Kunststoffsystem unwesentlich und beeinflußt nicht dessen Verarbeitbarkeit.

Ferner können den Kunststoffen Farbmittel zugesetzt werden, die farbliche Variationen jeder Art zulassen und gleichzeitig eine Beibehaltung der Lasermarkierung gewährleisten. Geeignete Farbmittel sind Buntpigmente, Weißpigmente, Schwarzpigmente, Effektpigmente und insbesondere farbige Metalloxidpigmente sowie organische Pigmente und Farbstoffe.

Unbeschichteter Graphit ist kommerziell erhältlich, z.B. bei der Fa. Merck KGaA. Der Graphit kann hierbei plättchenförmig oder von unregelmäßiger Geometrie sein.

Geeignete Graphitplättchen besitzen eine mittlere Teilchengröße von 0,1 bis 200 µm, insbesondere von 0,5 bis 20 µm und unregelmäßig geformte Graphitteilchen haben einen mittleren Durchmesser von 0,1 bis 200 µm, insbesondere von 1 bis 50 µm.

Das Aufbringen einer Beschichtung auf die Graphitpartikel geschieht in an sich bekannter Weise. Die Beschichtung kann z.B. im Fall von Turnbulls Blau erfolgen, indem einer wäßrigen Suspension des Graphits bei erhöhter Temperatur, vorzugsweise > 50 °C und einem geeigneten pH-Wert, vorzugsweise < 6, eine wäßrige K₃[Fe(CN)₆] Lösung und eine wäßrige Eisen(II)salzlösung unter Rühren zugesetzt wird. Durch Gegentitration einer Base wird der pH-Wert konstant gehalten. Das beschichtete Pigment wird abgesaugt, gewaschen und getrocknet. Häufig empfiehlt sich die Zugabe von anionischen und/oder nichtionischen Tensiden zur besseren Belastbarkeit.

Die Schichtdicke beträgt 10 bis 500 nm, vorzugsweise 20 bis 200 nm, insbesondere 20 bis 150 nm.

Für die Lasermarkierung besonders geeignet ist Graphit beschichtet mit CaCO₃, CaSO₄, Turnbulls Blau oder (Sn,Sb)O₂. Optional können SiO₂, SnO₂ und/oder Ti02-Zwischenschichten eingefügt werden.

Besonders bevorzugte Dotierstoffe zeigen folgende Zusammensetzung:

Graphit (Substrat) + TiO₂ + CaCO₃

Graphit (Substrat) + TiO₂ + CaSO₄

Graphit (Substrat) + TiO₂ + Turnbulls Blau

Graphit (Substrat) + TiO₂ + SiO₂ + (Sn,Sb)O₂

Graphit (Substrat) + SnO₂ + Ruß + TiO₂

Graphit (Substrat) + Turnbulls Blau

Alle bekannten thermoplastischen Kunststoffe, wie sie z.B. im Ullmann, Bd. 15, S.457 ff., Bd. 15, Verlag VCH beschrieben werden, können für die Lasermarkierung Anwendung finden. Geeignete Kunststoffe sind z.B. Polyethylen, Polypropylen, Polyamide, Polyester, Polyesterester, Polyetherester, Polyphenylenether, Polyacetal, Polybutylenterephthalat, Polymethylmethacrylat, Polyvinylacetal, Polystyrol, Acrylnitril-Butadien-Styrol (ABS), Acrylnitril-Styrol-Acrylester (ASA), Polycarbonat, Polyethersulfone, Polyetherketone sowie deren Copolymeren und/oder Mischung.

Die Einarbeitung der beschichteten Graphitplättchen in den thermoplastischen Kunststoff erfolgt, indem das Kunststoffgranulat mit dem Dotierstoff gemischt und dann unter Wärmeeinwirkung verformt wird. Dem Kunststoffgranulat können bei der Einarbeitung des Dotierstoffs gegebenenfalls Haftmittel, organische polymerverträgliche Lösemittel, Stabilisatoren und/oder unter den Arbeitsbedingungen temperaturstabile Tenside zugesetzt werden. Die Herstellung der dotierten Kunststoffgranulate erfolgt in der Regel so, daß in einem geeigneten Mischer das Kunststoffgranulat vorgelegt, mit eventuellen Zusätzen benetzt und danach der Dotierstoff zugesetzt und untergemischt wird. Die Pigmentierung des Kunststoffes erfolgt in der Regel über ein Farbkonzentrat (Masterbatch) oder Compound. Die so erhaltene Mischung kann dann direkt in einem Extruder oder einer Spritzgießmaschine verarbeitet werden. Die bei der Verarbeitung gebildeten Formkörper zeigen eine sehr homogene Verteilung des Dotierstoffs. Anschließend findet die Lasermarkierung mit einem geeigneten Laser statt.

Gegenstand der Erfindung ist auch ein Verfahren zur Herstellung der erfindungsgemäßen lasermarkierbaren Kunststoffe, dadurch gekennzeichnet, daß ein thermoplastischer Kunststoff mit dem Dotierstoff gemischt und dann unter Wärmeeinwirkung verformt wird.

Die Beschriftung mit dem Laser erfolgt derart, daß der Probenkörper in den Strahlengang eines gepulsten Lasers, vorzugsweise eines Nd:YAG-Lasers gebracht wird. Ferner ist eine Beschriftung mit einem CO₂-Laser, z.B. über eine Maskentechnik, möglich. Jedoch sind auch mit anderen herkömmlichen Lasertypen, die eine Wellenlänge in einem Bereich hoher Absorption des verwendeten Pigments aufweisen, die gewünschten Ergebnisse zu erzielen. Die erhaltene Markierung wird durch die Bestrahlungszeit (bzw. Pulszahl bei Pulslasern) und Bestrahlungsleistung.des Lasers sowie des verwendeten Kunststoffsystems bestimmt. Die Leistung der verwendeten Laser hängt von der jeweiligen Anwendung ab und kann im Einzelfall vom Fachmann ohne weiteres ermittelt werden.

Der verwendete Laser hat im allgemeinen eine Wellenlänge im Bereich von 157 nm bis 10,6 µm, vorzugsweise im Bereich von 532 nm bis 10,6 µm. Beispielsweise seien hier CO₂-Laser (10,6 µm) und Nd:YAG-Laser (1064 bzw. 532 nm) oder gepulste UV-Laser erwähnt. Die Excimerlaser weisen folgende Wellenlängen auf: F₂-Excimerlaser (157 nm), ArF-Excimerlaser (193 nm), KrCI-Excimerlaser (222 nm), KrF-Excimerlaser (248 nm), XeCI-Excimer-laser (308 nm), XeF-Excimerlaser (351 nm), frequenzvervielfachte Nd:YAG-Laser mit Wellenlängen von 355 nm (frequenzverdreifacht) oder 265 nm (frequenzvervierfacht). Besonders bevorzugt werden Nd:YAG-Laser (1064 bzw. 532 nm) und CO₂-Laser eingesetzt. Die Energiedichten der eingesetzten Laser liegen im allgemeinen im Bereich von 0,3 mJ/cm² bis 50 J/cm², vorzugsweise 0,3 mJ/cm² bis 10 J/cm².

Im Gegensatz zu unbeschichteten Graphitteilchen, wo Energiedichten von 0,3 bis 10 J/cm² erreicht werden, werden mit dem erfindungsgemäßen Dotierstoff hellere Markierungen bei gleichzeitig niedrigeren Energiedichten erzielt.

Bei der Verwendung von gepulsten Lasern liegt die Pulsfrequenz im allgemeinen im Bereich von 1 bis 30 kHz. Entsprechende Laser, die im erfindungsgemäßen Verfahren eingesetzt werden können, sind kommerziell erhältlich.

Die Verwendung des erfindungsgemäß pigmentierten Kunststoffes kann auf allen Gebieten erfolgen, wo bisher übliche Druckverfahren zur Beschriftung von Kunststoffen eingesetzt werden. Beispielsweise können Formkörper aus dem erfindungsgemäßen Kunststoff in der Elektro-, Elektronik- und Kraftfahrzeugindustrie Anwendung finden. Die Kennzeichnung und Beschriftung von z.B. Kabeln, Leitungen, Zierleisten bzw. Funktionsteilen im Heizungs-, Lüftungs- und Kühlbereich oder Schalter, Stecker, Hebel und Griffe, die aus dem erfindungsgemäßen Kunststoff bestehen, können selbst an schwer zugänglichen Stellen mit Hilfe von Laserlicht markiert werden. Weiterhin kann das erfindungsgemäße Kunststoffsystem bei Verpackungen im Lebensmittelbereich oder im Spielzeugbereich eingesetzt werden. Die Markierungen auf den Verpackungen zeichnen sich dadurch aus, daß sie wisch- und kratzfest, stabil bei nachträglichen Sterilisationsprozessen, und hygienisch rein beim Markierungsprozeß aufbringbar sind. Komplette Etikettenbilder können dauerhaft auf die Verpackung für ein Mehrwegsystem aufgebracht werden. Ein weiteres wichtiges Anwendungsgebiet für die Laserbeschriftung sind Kunststoffmarken zur individuellen Kennzeichnung von Tieren, sogenannte Cattle Tags oder Ohrmarken. Über ein Barcodesystem werden die Informationen gespeichert, welche spezifisch dem Tier zugehörig sind. Diese können bei Bedarf wieder mit Hilfe eines Scanners abgerufen werden. Die Beschriftung muß sehr dauerhaft werden, da die Marke teilweise über mehrere Jahre an den Tieren verbleiben.

Die Lasermarkierung von Kunststoffgegenständen bzw. Formkörpern, die aus dem erfindungsgemäßen Kunststoff bestehen, ist somit möglich.

Die folgenden Beispiele sollen die Erfindung erläutern ohne sie jedoch zu begrenzen. Die angegebenen Prozentangaben sind Gewichtsprozent.

### Beispiele

### Beispiel 1

100 g fein gepulverter Graphit (unregelmäßig geformte Graphitteilchen, Korngröße ca. 50 µm, der Fa. Merck KGaA) werden in vollentsalztes Wasser suspendiert und unter Rühren auf 75 °C erhitzt. Es werden jeweils 1 g anionisches Tensid (Texapon N28 der Fa. Henkel) und nichtionisches Tensid (Brij 30 der Fa. Merck KGaA) zugegeben und 5 Minuten verrührt. Der pH-Wert wird mit 20 %-iger H₂SO₄ auf 4,0 eingestellt, und es werden dann eine wäßrige K₃[Fe(CN)₆]-Lösung (60,04 g K₃[Fe(CN)₆] in ca. 750 ml vollent-salztem Wasser) und eine wäßrige FeSO₄-Lösung (76,06 g FeSO₄^{*}7H₂O und 12,7 g NH₄CI in mit 23 ml 20 %-iger H₂SO₄ angesäuertem vollentsalztem Wasser gelöst, Gesamtvolumen 750 ml) gleichzeitig aber getrennt zugetropft. Der pH-Wert wird mit 10 %-iger (NH₄)₂CO₃-Lösung konstant gehalten.

Nach vollständiger Zugabe der Lösungen wird noch 30 Minuten nachgerührt. Die Suspension wird dann abgesaugt und mit vollentsalztem Wasser salzfrei gewaschen. Das Pigment wird anschließend 15 h bei 110 °C getrocknet und durch ein 100 µm Sieb gesiebt.

### Beispiel 2

Ein PP-Granulat (PP-HD, Stamylen PPH 10 der Fa. DSM) wird durch Zusatz von 0,5 % des beschichteten Graphits aus Beispiel 1 im Spritzguß verarbeitet. Nach der Beschriftung mit einem CO₂-Laser mit einer Energiedichte von 7 J/cm² zeigen die Platten eine weiße und abriebfeste Beschriftung.

### Beispiel 3 (Vergleichsbeispiel)

Ein PP-Granulat (PP-HD, Stamylen PPH 10 der Fa. DSM) wird durch Zusatz von 0,5 % Graphit (unregelmäßig geformte Graphitteilchen, Korngröße ca. 50 µm, der Fa. Merck KGaA) im Spritzguß verarbeitet. Nach der Beschriftung mit einem CO₂-Laser zeigen die Platten eine im Vergleich zu Beispiel 2 kontrastärmere Beschriftung.

### Beispiel 4

100 g fein gepulverter Graphit (unregelmäßig geformte Graphitteilchen, Korngröße ca. 50 µm, der Fa. Merck KGaA) werden in vollentsalztes Wasser suspendiert und unter Rühren auf 75 °C erhitzt. Es werden jeweils 1 g anionisches Tensid (Texapon N28 der Fa. Henkel) und nichtionisches Tensid (Brij 30 der Fa. Merck KGaA) zugegeben und 5 Minuten verrührt. Der pH-Wert wird mit 37 %-iger HCI auf 2,2 eingestellt, und es werden 100 ml TiCI₄-Lösung (400 g/l) zu der Graphitsuspension getropft. Der pH-Wert wird mit 32 %-iger Natronlauge konstant gehalten. Anschließend wird unter Rühren die Suspension auf 30 °C abgekühlt, mit einer CaCI₂-Lösung (146,9 g CaCI₂^{*}2H₂O in 500 ml Wasser) versetzt und verrührt. Dann wird eine wäßrige Na₂CO₃-Lösung (116 g Na₂CO₃ in 600 ml Wasser) zugetropft.

Nach vollständiger Zugabe der Lösungen wird noch 30 Minuten nachgerührt. Die Suspension wird dann abgesaugt und mit Wasser salzfrei gewaschen. Das Pigment wird anschließend 15 h bei 110 °C und 30 Minuten bei 300 °C getrocknet.

### Beispiel 5

100 g Graphitplättchen mit einem Teilchendurchmesser von 1-100 µm (PB85 der Fa. Nishimura Kokuen Co., Ltd.) werden in vollentsalztes Wasser suspendiert und unter Rühren auf 75 °C erhitzt. Es werden jeweils 1 g anionisches Tensid (Texapon N28 der Fa. Henkel) und nichtionisches Tensid (Brij 30 der Fa. Merck KGaA) zugegeben und 5 Minuten verrührt. Der pH-Wert wird mit 20 %-iger H₂SO₄ auf 4,0 eingestellt, und es werden dann eine wäßrige K₃[Fe(CN)₆]-Lösung (60,04 g K₃[Fe(CN)₆] in ca. 750 ml vollent-salztem Wasser) und eine wäßrige FeSO₄-Lösung (76,06 g FeSO₄*7H₂O und 12,7 g NH₄CI in mit 23 ml 20 %-iger H₂SO₄ angesäuertem vollentsalztem Wasser gelöst, Gesamtvolumen 750 ml) gleichzeitig aber getrennt zugetropft. Der pH-Wert wird mit 10 %-iger (NH₄)₂CO₃-Lösung konstant gehalten.

Nach vollständiger Zugabe der Lösungen wird noch 30 Minuten nachgerührt. Die Suspension wird dann abgesaugt und mit vollentsalztem Wasser salzfrei gewaschen. Das Pigment wird anschließend 15 h bei 110 °C getrocknet und durch ein 100 µm Sieb gesiebt.

## Patentansprüche

1. Lasermarkierbare Kunststoffe, dadurch gekennzeichnet, daß sie als Dotierstoff ein oder mehrfach beschichtete Graphitteilchen enthalten.

2. Lasermarkierbare Kunststoffe gemäß Anspruch 1, dadurch gekennzeichnet, daß das Graphitteilchen mit CaCO₃, CaSO₄, Turnbulls Blau, Ruß, TiO₂ und/oder (Sn,Sb)O₂ beschichtet ist.

3. Lasermarkierbare Kunststoffe gemäß Anspruch 2, dadurch gekennzeichnet, daß das Graphitteilchen mit ein, zwei, drei oder vier Schichten belegt ist.

4. Lasermarkierbare Kunststoffe nach einem der Ansprüche 1 bis 3, dadurch gekennzeichnet, daß das mehrfach beschichtete Graphitteilchen eine TiO₂-, SiO₂- und/oder SnO₂-Zwischenschicht aufweist.

5. Lasermarkierbare Kunststoffe nach einem der Ansprüche 1 bis 4, dadurch gekennzeichnet, daß als Dotierstoff mit CaCO₃, CaSO₄, Turnbulls Blau, Ruß/TiO₂ und/oder (Sn,Sb)O₂ beschichtete Graphitplättchen eingesetzt werden.

6. Lasermarkierbare Kunststoffe nach einem der Ansprüche 1 bis 5, dadurch gekennzeichnet, daß der Anteil an Dotierstoff 0,01 bis 4 Gew.%, bezogen auf das Kunststoffsystem beträgt.

7. Lasermarkierbare Kunststoffe nach einem der Ansprüche 1 bis 6, dadurch gekennzeichnet, daß der Kunststoff ein Polyethylen, Polypropylen, Polyamid, Polyester, Polyesterester, Polyetherester, Polyphenylenether, Polyacetal, Polybutylenterephthalat, Polymethylmethacrylat, Polyvinylacetal, Polystyrol, Acrylnitril-Butadien-Styrol (ABS), Acrylnitril-Styrol-Acrylester (ASA), Polycarbonat, Polyethersulfone, Polyetherketone sowie deren Copolymeren und/oder Mischung ist.

8. Lasermarkierbare Kunststoffe nach einem der Ansprüche 1 bis 7, dadurch gekennzeichnet, daß sie zusätzlich Buntpigmente, Weißpigmente, Schwarzpigmente, Effektpigmente und/oder Farbstoffe enthalten.

9. Verfahren zur Herstellung von lasermarkierbaren Kunststoffen nach Anspruch 1, dadurch gekennzeichnet, daß man einen thermoplastischen Kunststoff mit Graphitteilchen, die ein- oder mehrfach beschichtet sind, mischt und dann unter Wärmewirkung verformt.

10. Verwendung der lasermarkierbaren Kunststoffe nach Anspruch 1 als Material zur Herstellung von Formkörpern, die mit Hilfe von Laser-Strahlung markiert werden.

11. Formkörper bestehend aus dem lasermarkierbaren Kunststoff nach Anspruch 1.
